# EUROPÄISCHE PATENTSCHRIFT

(11) **EP 3 045 250 B1**
(45) Veröffentlichungstag und Bekanntmachung des Hinweises auf die Patenterteilung: **07.08.2019**
(21) Anmeldenummer: 16151791.7
(22) Anmeldetag: 19.01.2016
(51) Int. Cl.: B23F 19/00, B23F 17/00, F16H 1/32

(54) **VERFAHREN ZUR HERSTELLUNG EINES INNENVERZAHNTEN HOHLRADS SOWIE VERFAHREN ZUR HERSTELLUNG ODER ZUR REPARATUR EINES PLANETENGETRIEBES**
METHOD OF MANUFACTURING AN INTERNALLY GEARED HOLLOW WHEEL AND METHOD FOR MANUFACTURING OR REPAIRING A PLANETARY GEAR
PROCEDE DE FABRICATION D'UNE COURONNE A DENTURE INTERIEURE ET PROCEDE DE FABRICATION OU DE REPARATION D'UN ENGRENAGE PLANETAIRE

(30) Priorität: 19.01.2015 EP 15151566
(43) Veröffentlichungstag der Anmeldung: 20.07.2016
(73) Patentinhaber: Flender GmbH, 46395 Bocholt (DE)
(72) Erfinder: Klein, Andreas, 52070 Aachen (DE); Vriesen, Johannes, 46399 Bocholt (DE)
(74) Vertreter: Maier, Daniel Oliver

(56) Entgegenhaltungen:
- EP-A1- 2 554 841
- US-A- 3 273 232
- US-A- 3 972 106

## Beschreibung

Die vorliegende Erfindung betrifft ein Verfahren zur Herstellung eines innenverzahnten Hohlrads, das gehäusefest in einem Getriebegehäuse eines Planetengetriebes montiert werden soll, wobei das Verfahren den Schritt aufweist, dass über den Umfang des Hohlrads an den Lastflanken der einzelnen Hohlradzähne Verzahnungskorrekturen vorgenommen werden. Ferner betrifft die vorliegende Erfindung ein Verfahren zur Herstellung oder zur Reparatur eines ein Getriebegehäuse aufweisenden Planetengetriebes, bei dem ein solches Hohlrad gehäusefest in dem Getriebegehäuse montiert wird.

Ein Herstellungsverfahren für ein innenverzahntes Hohlrad ist in der EP 2 554 841 A1 offenbart.

Die einzelnen Zahnräder eines Planetengetriebes werden während des bestimmungsgemäßen Betriebs normalerweise in einer einzigen betriebsrelevanten Drehrichtung und Drehmomentrichtung betrieben, was dazu führt, dass nur eine der beiden Zahnflanken der jeweiligen Zähne eines Hohlrads genutzt wird, die auch als Lastflanke bezeichnet wird. Die so genannte Rückflanke kommt hingegen nur in nicht angestrebten Betriebszuständen zum Tragen, wie beispielsweise im Reversierbetrieb eines Planetengetriebes einer Windkraftanlage, um nur ein Beispiel zu nennen.

Bei der Herstellung eines innenverzahnten Hohlrades ist es im Stand der Technik bereits bekannt, über den Umfang des Hohlrads an den Lastflanken der einzelnen Zähne umfänglich konstante Verzahnungskorrekturen vorzunehmen. Solche Verzahnungskorrekturen dienen dazu, verschiedene fertigungs- oder montagebedingte Abweichungen und/oder elastische Verformungen auszugleichen. Verzahnungskorrekturen unterscheiden zwischen Zahnbreiten- und Zahnhöhenrichtung und sind gewollte Abweichungen von der theoretischen Zahnform, beispielsweise von der Evolvente. Hierbei werden Verzahnungen in verschiedenen Parametern korrigiert bzw. modifiziert, um positive Effekte während des Zahneingriffs zu erreichen. Zum Beispiel kann eine Verzahnungskorrektur auf ein möglichst gleichmäßiges Tragen der Belastung in Zahnbreitenrichtung und/oder auf eine möglichst geringe Anregung aus dem Zahnkraftverlauf in Zahnhöhenrichtung abzielen, um Geräusche zu reduzieren und/oder Schwingungen zu mindern.

Im Rahmen von Instandsetzungsarbeiten müssen verschlissene Lastflanken eines Hohlrads ggf. überarbeitet werden, um auch weiterhin einen ordnungsgemäßen Betrieb des Planetengetriebes zu gewährleisten. Ist ein solches Überarbeiten nicht mehr möglich oder wirtschaftlich betrachtet nicht mehr sinnvoll, so wird das Hohlrad durch ein neues Hohlrad ersetzt.

Ausgehend von diesem Stand der Technik ist es eine Aufgabe der vorliegenden Erfindung, alternative Verfahren der eingangs genannten Art zu schaffen.

Zur Lösung dieser Aufgabe schafft die vorliegende Erfindung ein Verfahren der eingangs genannten Art, bei dem die Verzahnungskorrekturen an den einzelnen Lastflanken gezielt unterschiedlich über den Umfang des Hohlrads vorgenommen werden, so dass sich entlang des Umfangs Lastflanken mit verschiedenen Flankentopographien ergeben. Auf diese Weise können lastbedingte Verformungen und/oder Schiefstellungen der Hohlradzähne, die während des bestimmungsgemäßen Einsatzes des Hohlrads beispielsweise aufgrund von Gewichtslasten eines oder mehrerer Getriebeteile hervorgerufen werden, wenigstens teilweise kompensiert werden. Die Verzahnungskorrekturen werden also nicht konstant entlang des Umfangs des Hohlrads vorgenommen, so dass sich Lastflanken identischer Geometrien ergeben. Vielmehr werden die Verzahnungskorrekturen lokal entlang des Umfangs variiert, womit Lastflanken unterschiedlicher Flankentopographien hergestellt werden, die lokal voneinander abweichenden elastischen Verformungen der Hohlradzähne und des Hohlradkranzes Rechnung tragen. Auf diese Weise wird die Lebensdauer des Hohlrads verbessert. Bei den Verzahnungskorrekturen können Steifigkeitsunterschiede zwischen dem Hohlrad und einer an diesem angebrachten Drehmomentabstützung berücksichtigt werden. Alternativ oder zusätzlich kann bei den Verzahnungskorrekturen eine Verformung eines Planetenträgers des Planetengetriebes berücksichtigt werden, insbesondere eine torsionsbedingte Verformung, da diese eine maßgebliche Größe zur Abstimmung der Verzahnungskorrektur in Zahnbreitenrichtung darstellt. Ferner können die Verzahnungskorrekturen eine den nominellen Schrägungswinkel gezielt modifizierende Flankenlinien-Winkelkorrektur umfassen.

Erfindungsgemäß weist das Verfahren den weiteren Schritt auf, dass über den Umfang des Hohlrads auch für die Rückflanken der einzelnen Hohlradzähne Verzahnungskorrekturen derart vorgenommen werden, dass jede verzahnungskorrigierte Lastflanke durch eine vorbestimmte verzahnungskorrigierte Rückflanke gleicher Flankentopographie ersetzt wird, wenn das Hohlrad um eine radiale Wendeachse, die sich mittig durch den Hohlradmittelpunkt erstreckt, um 180° gewendet und um einen vorbestimmten Winkel um eine axiale Hohlradmittelachse gedreht wird, wobei der vorbestimmte Winkel in Abhängigkeit von der Wahl der Wendeachse auch 0° betragen kann. Dank dieses weiteren Schrittes kann das Hohlrad selbst dann weiter verwendet werden, wenn seine Lastflanken irreparabel verschlissen sind. Hierzu muss es im Rahmen von Wartungsarbeiten lediglich demontiert, um 180° um die Wendeachse gewendet, um den vorbestimmten Winkel um eine axiale Hohlradmittelachse gedreht und in diesem Zustand erneut montiert werden.

Wenn eine Lastflankenachse definiert wird, die sich ausgehend von der axialen Hohlradmittelachse radial auswärts und mittig durch einen Zahn oder eine Zahnlücke des Hohlrads erstreckt, und die Lastflanken ausgehend von der Lastflankenachse in einer ersten Umfangsrichtung von 1 bis n durchnummeriert werden, wobei n der Gesamtanzahl der Zähne des Hohlrads entspricht, und wenn eine Rückflankenachse definiert wird, die sich ausgehend von der axialen Hohlradmittelachse radial auswärts und mittig durch einen Zahn oder eine Zahnlücke des Hohlrads erstreckt, wobei die Rückflankenachse in einem vorbestimmten Winkel Δ zur Lastflankenachse angeordnet ist, und die Rückflanken ausgehend von der Rückflankenachse in einer zweiten, der ersten Umfangsrichtung entgegengesetzten Umfangsrichtung von 1 bis n durchnummeriert werden, wobei n der Gesamtanzahl der Zähne des Hohlrads entspricht, so werden die Verzahnungskorrekturen an den Rückflanken vorteilhaft derart vorgenommen, dass sämtliche Verzahnungskorrekturen, die an einer Rückflanke vorgenommen werden, mit denjenigen Verzahnungskorrekturen, die an einer Lastflanke mit identischer Nummerierung vorgenommen werden, bezogen auf eine Symmetrieachse innerhalb von Ebenen, die sich senkrecht zur Symmetrieachse erstrecken, punktsymmetrisch sind, wobei sich die Symmetrieachse mittig zwischen der Lastflankenachse und der Rückflankenachse erstreckt, also in einem Winkel Δ/2 sowohl zur Lastflankenachse als auch zur Rückflankenachse.

Bevorzugt entspricht die Wendeachse der Symmetrieachse, wodurch sich eine einfache Ausgestaltung des Hohlrads ergibt.

Vorteilhaft beträgt der vorbestimmte Winkel Δ 0°. Auch hierdurch vereinfacht sich die Auslegung des Hohlrads.

Gemäß einer Ausgestaltung der vorliegenden Erfindung erstreckt sich die Lastflankenachse in einem vorbestimmten Winkel δ zu einer Referenzachse, die sich ausgehend von der axialen Hohlradmittelachse radial auswärts und mittig durch das Hohlrad erstreckt und eine Referenz in Bezug auf ein System bildet, das ein Getriebe aufweist, in dem das Hohlrad bestimmungsgemäß montiert werden soll. Eine derartige Referenzachse kann die Auslegung des Hohlrads bezogen auf das System erleichtern, in dem das Hohlrad bestimmungsgemäß montiert werden soll.

Bevorzugt werden die Verzahnungskorrekturen jeweils für zumindest eine Lastflanke und zumindest eine Rückflanke zeitgleich durchgeführt, insbesondere im Rahmen eines Zweiflankenschliffs auf einer Profilschleifmaschine. Auf diese Weise kann die für die Durchführung der Verzahnungskorrekturen erforderliche Zeitdauer reduziert werden.

Vorteilhaft wird das Hohlrad beidseitig jeweils mit einer Flanschverbindung und/oder einer Anordnung von Montagebohrungen versehen, die zur Befestigung des Hohlrads an dem Getriebegehäuse dient, wobei die Positionen der Flanschverbindungen und/oder der Montagebohrungen in Abhängigkeit von der Position der Referenzachse und/oder von der Position der Lastflankenachse und/oder von der Position der Rückflankenachse derart gewählt sind, dass sich das Hohlrad im gewendeten Zustand nachbearbeitungsfrei montieren lässt, in dem jede verzahnungskorrigierte Lastflanke durch die vorbestimmte verzahnungskorrigierte Rückflanke gleicher Flankentopographie ersetzt ist.

Bevorzugt wird das Hohlrad mit zumindest einer die bestimmungsgemäße Einbauposition kennzeichnenden Markierung versehen, wodurch die Montage vereinfacht wird.

Ferner wird vorteilhaft auch eine benachbart zum Hohlrad angeordnete gehäusefeste Getriebekomponente oder das Getriebegehäuse selbst mit einer weiteren die bestimmungsgemäße Einbauposition des Hohlrads kennzeichnenden Markierung.

Zur Lösung der eingangs genannten Aufgabe schafft die vorliegende Erfindung ferner ein Verfahren zur Herstellung oder zur Reparatur eines ein Getriebegehäuse aufweisenden Planetengetriebes, das dadurch gekennzeichnet ist, das ein gemäß des erfindungsgemäßen Verfahrens hergestelltes Hohlrad gehäusefest in dem Getriebegehäuse montiert wird.

Weitere Merkmale und Vorteile der vorliegenden Erfindung werden anhand der nachfolgenden Beschreibung eines Verfahrens gemäß einer Ausführungsformen der vorliegenden Erfindung unter Bezugnahme auf die beiliegende Zeichnung deutlich. Darin ist
- Figur 1: eine schematische geschnittene Draufsicht eines Teils eines Triebstrangs einer Windkraftanlage;
- Figur 2: eine perspektivische Ansicht eines Hohlrads des in Figur 1 dargestellten Antriebstrangs;
- Figur 3: eine schematische Seitenansicht eines oberen Hohlradausschnitts des in Figur 2 dargestellten Hohlrads, wenn dieses in axialer Richtung betrachtet wird; und
- Figur 4: eine schematische perspektivische Ansicht einer Lastflanke und einer Rückflanke des in Figur 3 dargestellten Hohlradausschnitts.

Der Triebstrang einer Windkraftanlage umfasst als Hauptkomponenten normalerweise einen Rotor, eine Rotorwelle, ein Getriebe, eine Kupplung und einen Generator.

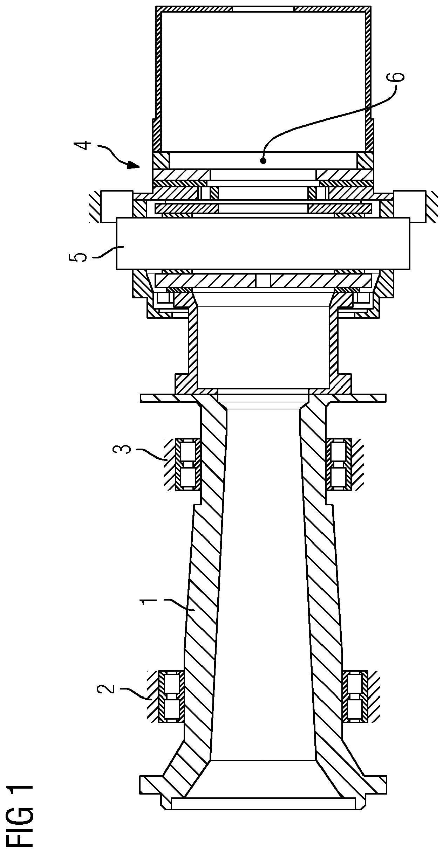

Figur 1 zeigt beispielhaft einen vereinfacht skizzierten Teil eines solchen Triebstranges mit einer Rotorwelle 1, die mittels zwei Lagerungen 2 und 3 gelagert ist, und einem an die Rotorwelle 1 angeschlossenen Getriebe 4, das wiederum über eine Kupplung mit einem nicht näher dargestellten Generator verbunden ist. Das Getriebe 4 umfasst eine Getriebehauptstufe, die als Planetenradstufe ausgeführt ist und ein gehäusefest montiertes Hohlrad 5 aufweist. Unmittelbar benachbart zum Hohlrad 5 ist das Getriebe 4 zur Drehmomentabstützung mit einem Grundrahmen der Windkraftanlage verbunden und stellt eine Art vertikale Last am getriebeseitigen Ende der Rotorwelle 1 dar. Je nach tatsächlicher Ausführung kommt es vor, dass der Schwerpunkt 6 des Getriebes 4, der nicht unmittelbar mit der Rotorwelle 1 verbunden ist, außerhalb des Bereiches der Drehmomentabstützung liegt. Für diesen Fall ergeben sich Lasten, die ursächlich aus diesem Gewichtsanteil resultieren, im Wesentlichen von der Rotorwelle 1 getragen werden und sich in der Regel durch Querkraftkomponenten darstellen lassen. Diese Querkraftkomponenten muss das System ebenfalls abstützen. Innerhalb der Getriebehauptstufe kann es dazu kommen, dass die Rotationsachse desjenigen Getriebeteils, der mit der Rotorwelle 1 direkt verbunden ist, und die Mittelachse des gehäusefesten Getriebeteils nicht deckungsgleich sind, die Achsen also nicht miteinander fluchten. Hierdurch ergeben sich Verformungen und hauptsächlich vertikale Schiefstellungen im System, die sich entlang des Umfangs des Hohlrads 5 lokal verschieden auf den Zahnkontakt auswirken und mit unterschiedlichen elastischen Verformungen der Hohlradzähne 7 entlang des Hohlradumfangs und des Hohlradkranzes einhergehen.

Zur Kompensation solcher lastbedingter Verformungen und/oder Schiefstellungen der Hohlradzähne 7, die auf auftretende Querkräfte zurückzuführen sind, die nicht über eine Drehmomentabstützung oder dergleichen aufgenommen werden können, insbesondere auf Querkräfte, die auf Gewichtslasten des Getriebes 4 zurückzuführen sind, werden bei einem Verfahren gemäß einer Ausführungsform der vorliegenden Erfindung Verzahnungskorrekturen der Hohlradverzahnung gezielt unterschiedlich und damit positionsabhängig über den Umfang des Hohlrads 5 an den Lastflanken 8 der einzelnen Hohlradzähne 7 vorgenommen, um die Lasten gleichmäßig über den Umfang des Hohlrads 5 zu verteilen. Entsprechend werden Lastflanken 8 hergestellt, die sich hinsichtlich ihrer Geometrie voneinander unterscheiden. Bei den Verzahnungskorrekturen werden insbesondere den nominellen Schrägungswinkel gezielt modifizierende, entlang des Umfangs lokal veränderliche Flankenlinien-Winkelkorrekturen durchgeführt.

Die Verzahnungskorrekturen werden für einen vorbestimmten Betriebspunkt festgelegt, wobei sie derart zu wählen sind, dass für den gesamten Betriebsbereich zumindest tragbare Lastverteilungen und Lastaufteilungen für die Verzahnungen und indirekt auch für die Lager gewährleistet sind, insbesondere für die Lager der Planetenräder. Ferner sollten die Verzahnungskorrekturen derart ausgelegt werden, dass auch Steifigkeitsunterschiede zwischen dem Hohlrad 5 und der daran angebrachten Drehmomentabstützung berücksichtigt werden, ebenso wie eine Verformung des Planetenträgers des Getriebes 4, insbesondere eine torsionsbedingte Verformung. Für die Fertigung des Hohlrads 5 ist nach erfolgter Auslegung eine Fertigungszeichnung mit den erforderlichen geometrischen Daten und Verzahnungsparametern zu erstellen. Dabei sind auch Zeichnungseintragungen vorzunehmen, die den geometrischen Daten die entsprechende Umfangsposition zuordnen. Um sicherzustellen, dass das Hohlrad 5 nach Durchführung der lokal unterschiedlichen Verzahnungskorrekturen auch positionsgenau montiert werden kann, wird dieses bevorzugt mit einer die bestimmungsgemäße Einbauposition des Hohlrads 5 kennzeichnenden Markierung M versehen. Zusätzlich kann eine benachbart zum Hohlrad 5 angeordnete gehäusefeste Getriebekomponente oder das Getriebegehäuse selbst, auch wenn dies vorliegend nicht dargestellt ist, mit einer weiteren die bestimmungsgemäße Einbauposition des Hohlrads 5 kennzeichnenden Markierung M versehen werden, wobei die Markierungen M beim Einbau des Hohlrads 5 miteinander fluchtend anzuordnen sind.

Bei dem erfindungsgemäßen Verfahren werden allerdings nicht nur an den Lastflanken 8 sondern auch an den Rückflanken 9 jedes Hohlradzahns 7 Verzahnungskorrekturen derart durchgeführt, dass in einem gewendeten Zustand des Hohlrads 5 jede verzahnungskorrigierte Lastflanke 8 durch eine vorbestimmte verzahnungskorrigierte Rückflanke 9 gleicher Flankentopographie ersetzt wird.

Hierzu wird gemäß einer Ausführungsform des erfindungsgemäßen Verfahrens in einem ersten Schritt eine Lastflankenachse A_{L} definiert, die sich ausgehend von einer axialen Hohlradmittelachse Aₓ radial auswärts und mittig durch einen Hohlradzahn 7 oder mittig durch eine Zahnlücke 10 des Hohlrads 5 erstreckt. Daraufhin werden die Lastflanken 8 ausgehend von der Lastflankenachse A_{L} in einer ersten Umfangsrichtung, die durch den Pfeil 11 gekennzeichnet ist, von 1 bis n durchnummeriert, wobei n der Gesamtanzahl der Hohlradzähne 7 entspricht. Hierdurch ergeben sich Lastflankennummern von L₁ bis Lₙ.

In einem weiteren Schritt wird eine Rückflankenachse A_{R} definiert, die sich ausgehend von der axialen Hohlradmittelachse A_{X} radial auswärts und mittig durch einen Hohlradzahn 7 oder eine Zahnlücke 10 des Hohlrads 5 erstreckt, wobei die Rückflankenachse A_{R} in einem vorbestimmten Winkel Δ zur Lastflankenachse A_{L} angeordnet ist, der vorliegend von 0° verschieden ist, grundsätzlich aber ebenso 0° aufweisen und entsprechend mit der Lastflankenachse A_{L} zusammenfallen kann. Anschließend werden die Rückflanken 9 ausgehend von der Rückflankenachse A_{R} in einer zweiten, der ersten Umfangsrichtung entgegengesetzten Umfangsrichtung, die durch den Pfeil 12 gekennzeichnet ist, von 1 bis n durchnummeriert werden, wodurch sich Rückflankennummern von R₁ bis Rₙ ergeben.

Des Weiteren kann eine Referenzachse A_{Ref} definiert werden, die sich ausgehend von der axialen Hohlradmittelachse A_{X} radial auswärts und mittig durch das Hohlrad 5 erstreckt und einen vorbestimmten Winkel δ mit der Lastflankenachse A_{L} einschließt. Eine solche Referenzachse A_{ref} kann als eine Referenz in Bezug auf das in Figur 1 gezeigte System bilden. Es sei jedoch darauf hingewiesen, dass die Definition einer solchen Referenzachse A_{ref} optional ist. Auch kann diese mit der Lastflankenachse A_{L} zusammenfallen, um nur ein Beispiel zu nennen.

Für die Lastflanken 8 werden dann, wie eingangs bereits beschrieben, die durchzuführenden belastungsabhängigen Verzahnungskorrekturen berechnet, die für die Lastflanken L₁ bis Lₙ verschiedene Geometrien ergeben.

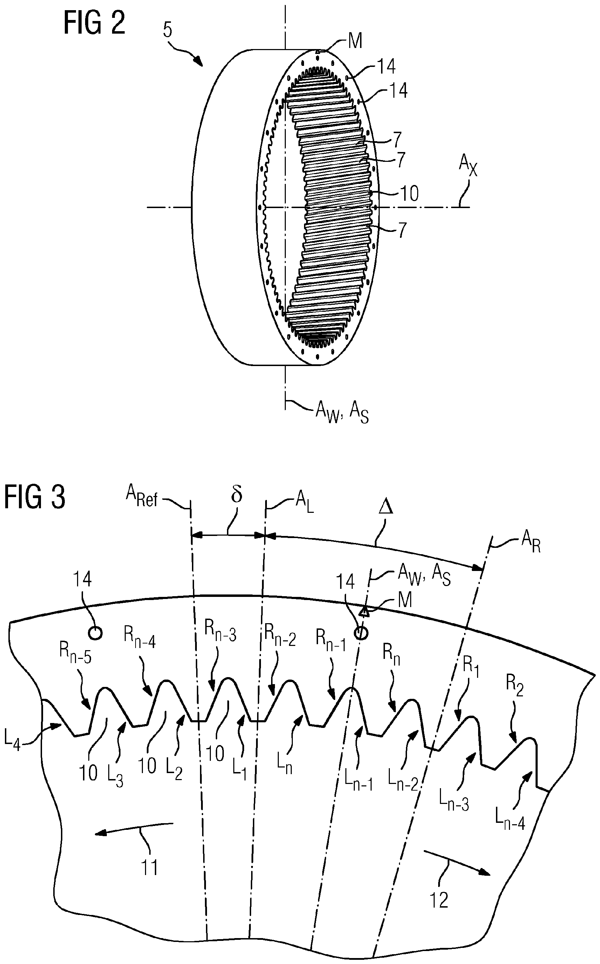

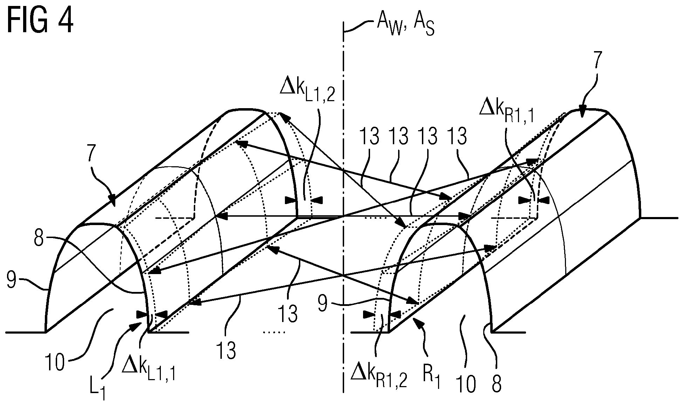

Ferner werden auch für die Rückflanken 9 die durchzuführenden Verzahnungskorrekturen berechnet, und zwar derart, dass sämtliche Verzahnungskorrekturen, die an einer der Rückflanken R₁ bis Rₙ vorgenommen werden, mit denjenigen Verzahnungskorrekturen, die an der Lastflanke L₁ bis Lₙ mit identischer Nummerierung vorgenommen werden, bezogen auf eine Symmetrieachse A_{S} innerhalb von Ebenen, die sich senkrecht zur Symmetrieachse A_{S} erstrecken, punktsymmetrisch sind, wobei sich die Symmetrieachse A_{S} mittig zwischen der Lastflankenachse A_{L} und der Rückflankenachse A_{R} erstreckt, also in einem Winkel Δ/2 sowohl zur Lastflankenachse A_{L} als auch zur Rückflankenachse A_{R}. Figur 4 zeigt in diesem Zusammenhang beispielhaft die Lastflanke L₁ und die dieser zugeordnete Rückflanke R₁ gemäß Figur 3, wobei das Hohlrad 5 im abgerollten Zustand dargestellt ist. Die durchgezogenen Linien kennzeichnen vorliegend das Hohlrad 5 im nicht verzahnungskorrigierten Zustand, und die gepunkteten Linien im ordnungsgemäß verzahnungskorrigierten Zustand. Wie es beispielhaft durch die Doppelpfeile 13 angedeutet ist, hat jeder Punkt innerhalb der an der Lastflanke L1 durchzuführenden Verzahnungskorrekturen seine Entsprechung innerhalb der an der Rückflanke R1 durchzuführenden Verzahnungskorrekturen, wenn er innerhalb einer Ebene, die sich senkrecht zu der Symmetrieachse A_{S} erstreckt, an der Symmetrieachse A_{S} gespiegelt wird, also wenn eine Punktspiegelung auf einer gemeinsamen Höhe in radialer Zahnhöhenrichtung durchgeführt wird. Analog findet auch jedes Maß Δk, das ausgehend von einer Zahnlücke 10 von der Lastflanke L1 abzutragen ist, seine Entsprechung an der Rückflanke R1, siehe die beispielhaft eingetragenen, jeweils zusammengehörenden Paare Δk_{L1,1} und Δk_{R1,1} sowie Δk_{L1,2} und Δk_{R1,2}, wobei Δk in Richtung der Zahnhöhe und/oder in Richtung der Zahnbreite variiert.

Anschließend werden die für die Lastflanken 8 und die Rückflanken 9 berechneten Verzahnungskorrekturen durchgeführt. Die Verzahnungskorrekturen können an einer Lastflanke 8 und an einer Rückflanke 9 vorteilhaft zeitgleich durchgeführt werden, beispielsweise durch einen Zweiflankenschliff auf einer Profilschleifmaschine, um nur ein Beispiel zu nennen. Auf diese Weise kann die für die Durchführung der Verzahnungskorrekturen erforderliche Zeitdauer reduziert werden.

Alternativ können auch lediglich die Verzahnungskorrekturen für die Lastflanken 8 berechnet und durchgeführt werden, woraufhin das Hohlrad um 180° um die Symmetrieachse AS gewendet und dann mit dem gleichen Bearbeitungsprogramm von der anderen Seite bearbeitet wird, um die Verzahnungskorrekturen an den Rückflanken 9 vorzunehmen.

Das in der zuvor beschriebenen Weise verzahnungskorrigierte Hohlrad 5 bildet ein Wendehohlrad, das im Falle eines Verschleißes im Rahmen von Wartungsarbeiten gewendet werden kann. Hierzu muss das Hohlrad 5 lediglich um 180° um die Wendeachse A_{W} gewendet und ggf. um einen vorbestimmten Winkel um die axiale Hohlradmittelachse A_{X} gedreht werden. Fällt die Wendeachse A_{W} mit der Symmetrieachse A_{S} zusammen, wie es in Figur 3 dargestellt ist, so genügt allein ein Wenden des Hohlrads 5 um 180°. Fallen hingegen die Wendeachse A_{W} und die Symmetrieachse A_{S} um einen Winkel α (nicht gezeigt) auseinander, so muss das Hohlrad 5 zusätzlich um den Winkel α um die Hohlradmittelachse A_{X} gedreht werden, um jeweils die Lastflanken 8 durch die zugehörigen Rückflanken 9 zu ersetzen.

Um das Hohlrad 5 sowohl im ungewendeten als auch im gewendeten Zustand im Getriebe 4 nachbearbeitungsfrei montieren zu können, wird dieses bevorzugt mit einer Anordnung entsprechend positionierter Montagebohrungen 14 oder beidseitig mit einer entsprechenden Flanschverbindung (nicht gezeigt) versehen. Ferner wird das Hohlrad 5 bevorzugt mit einer die bestimmungsgemäße Einbauposition des Hohlrads 5 im gewendeten Zustand kennzeichnenden zweiten Markierung M versehen, die ggf. mit der ersten Markierung zusammenfallen kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. So können beispielsweise die Lastflankenachse A_{L}, die Rückflankenachse A_{R} und damit auch die Symmetrieachse A_{S} zusammenfallen, so dass der Winkel Δ 0° beträgt. Zusätzlich kann auch die Wendeachse A_{W} mit den genannten Achsen zusammenfallen, wodurch die Berechnung und Durchführung der Verzahnungskorrekturen vereinfacht werden. Die Berechnungen der Verzahnungskorrekturen erfolgen anhand von geeigneten mathematischen Methoden.

## Patentansprüche

1. Verfahren zur Herstellung eines innenverzahnten Hohlrads (5), das gehäusefest in einem Getriebegehäuse eines Planetengetriebes montiert werden soll, wobei das Verfahren den Schritt aufweist, dass über den Umfang des Hohlrads (5) an den Lastflanken (8) der einzelnen Hohlradzähne (7) Verzahnungskorrekturen vorgenommen werden, wobei die Verzahnungskorrekturen an den einzelnen Lastflanken (8) gezielt unterschiedlich über den Umfang des Hohlrads (5) vorgenommen werden, so dass sich entlang des Umfangs Lastflanken (8) mit verschiedenen Flankentopographien ergeben, **dadurch gekennzeichnet, dass** das Verfahren den weiteren Schritt aufweist, dass über den Umfang des Hohlrads (5) auch für die Rückflanken (9) der einzelnen Hohlradzähne (7) Verzahnungskorrekturen derart vorgenommen werden, dass jede verzahnungskorrigierte Lastflanke (8) durch eine vorbestimmte verzahnungskorrigierte Rückflanke (9) gleicher Flankentopographie ersetzt wird, wenn das Hohlrad (5) um eine radiale Wendeachse (A_{W}), die sich mittig durch den Hohlradmittelpunkt erstreckt, um 180° gewendet und um einen vorbestimmten Winkel um eine axiale Hohlradmittelachse (A_{X}) gedreht wird, wobei der vorbestimmte Winkel in Abhängigkeit von der Wahl der Wendeachse auch 0° betragen kann.

2. Verfahren nach Anspruch 1, **dadurch gekennzeichnet, dass**,
- wenn eine Lastflankenachse (A_{L}) definiert wird, die sich ausgehend von der axialen Hohlradmittelachse (A_{X}) radial auswärts und mittig durch einen Hohlradzahn (7) oder eine Zahnlücke (10) des Hohlrads (5) erstreckt, und die Lastflanken (8) ausgehend von der Lastflankenachse (A_{L}) in einer ersten Umfangsrichtung von 1 bis n durchnummeriert werden, wobei n der Gesamtanzahl der Hohlradzähne (7) des Hohlrads (5) entspricht, und
- wenn eine Rückflankenachse (A_{R}) definiert wird, die sich ausgehend von der axialen Hohlradmittelachse (A_{X}) radial auswärts und mittig durch einen Hohlradzahn (7) oder eine Zahnlücke (10) des Hohlrads (5) erstreckt, wobei die Rückflankenachse (A_{R}) in einem vorbestimmten Winkel Δ zur Lastflankenachse (A_{L}) angeordnet ist, und die Rückflanken (9) ausgehend von der Rückflankenachse (A_{R}) in einer zweiten, der ersten Umfangsrichtung entgegengesetzten Umfangsrichtung von 1 bis n durchnummeriert werden, wobei n der Gesamtanzahl der Hohlradzähne (7) des Hohlrads (5) entspricht,
die Verzahnungskorrekturen an den Rückflanken (9) derart vorgenommen werden, dass sämtliche Verzahnungskorrekturen, die an einer Rückflanke (9) vorgenommen werden, mit denjenigen Verzahnungskorrekturen, die an einer Lastflanke (8) mit identischer Nummerierung vorgenommen werden, bezogen auf eine Symmetrieachse (A_{S}) innerhalb von Ebenen, die sich senkrecht zur Symmetrieachse (A_{S}) erstrecken, punktsymmetrisch sind, wobei sich die Symmetrieachse (A_{S}) mittig zwischen der Lastflankenachse (A_{L}) und der Rückflankenachse (A_{R}) erstreckt, also in einem Winkel Δ/2 sowohl zur Lastflankenachse (A_{L}) als auch zur Rückflankenachse (A_{R}).

3. Verfahren nach Anspruch 1 oder 2, **dadurch gekennzeichnet, dass** die Wendeachse (A_{W}) der Symmetrieachse (A_{S}) entspricht.

4. Verfahren nach einem der Ansprüche 2 oder 3, **dadurch gekennzeichnet, dass** der vorbestimmte Winkel Δ 0° beträgt.

5. Verfahren nach einem der Ansprüche 2 bis 4, **dadurch gekennzeichnet, dass** sich die Lastflankenachse (A_{L}) in einem vorbestimmten Winkel δ zu einer Referenzachse (A_{Ref}) erstreckt, die sich ausgehend von der axialen Hohlradmittelachse (A_{X}) radial auswärts und mittig durch das Hohlrad (5) erstreckt und eine Referenz in Bezug auf ein System bildet, das ein Getriebe (4) aufweist, in dem das Hohlrad (5) bestimmungsgemäß montiert werden soll.

6. Verfahren nach einem der vorhergehenden Ansprüche, **dadurch gekennzeichnet, dass** die Verzahnungskorrekturen jeweils für zumindest eine Lastflanke (8) und zumindest eine Rückflanke (9) zeitgleich durchgeführt werden, insbesondere im Rahmen eines Zweiflankenschliffs auf einer Profilschleifmaschine.

7. Verfahren nach einem der vorhergehenden Ansprüche, **dadurch gekennzeichnet, dass** das Hohlrad (5) beidseitig jeweils mit einer Flanschverbindung und/oder Anordnung von Montagebohrungen (14) versehen wird, die zur Befestigung des Hohlrads (5) an dem Getriebegehäuse dient, wobei die Positionen der Flanschverbindungen und/oder der Montagebohrungen (14) in Abhängigkeit von der Position der Referenzachse (A_{Ref}) und/oder von der Position der Lastflankenachse (A_{L}) und/oder von der Position der Rückflankenachse (A_{R}) derart gewählt sind, dass sich das Hohlrad (5) im gewendeten Zustand nachbearbeitungsfrei montieren lässt, in dem jede verzahnungskorrigierte Lastflanke (8) durch die vorbestimmte verzahnungskorrigierte Rückflanke (9) gleicher Geometrie ersetzt ist.

8. Verfahren nach einem der vorhergehenden Ansprüche, **dadurch gekennzeichnet, dass** das Hohlrad (5) mit zumindest einer die bestimmungsgemäße Einbauposition kennzeichnenden Markierung (M) versehen wird.

9. Verfahren nach Anspruch 8, **dadurch gekennzeichnet, dass** auch eine benachbart zum Hohlrad (5) angeordnete gehäusefeste Getriebekomponente oder das Getriebegehäuse selbst mit einer weiteren die bestimmungsgemäße Einbauposition des Hohlrads (5) kennzeichnenden Markierung (M) versehen wird.

10. Verfahren zur Herstellung oder zur Reparatur eines ein Getriebegehäuse aufweisenden Planetengetriebes, **dadurch gekennzeichnet, dass** ein gemäß einem Verfahren nach einem der vorhergehenden Ansprüche hergestelltes Hohlrad (5) gehäusefest in dem Getriebegehäuse montiert wird.

## Claims

1. Method for manufacturing an internally geared hollow wheel (5) which is to be mounted fixed to the housing in a gear casing of a planetary gear, wherein the method comprises the step of making gear tooth corrections over the circumference of the hollow wheel (5) on the load flanks (8) of the individual hollow wheel gear teeth (7), wherein the gear tooth corrections to the individual load flanks (8) are performed selectively differently over the circumference of the hollow wheel (5), such that load flanks (8) with different flank topographies are produced along the circumference, **characterised in that** the method comprises the further step of also making gear tooth corrections over the circumference of the hollow wheel (5) for the rear flanks (9) of the individual hollow wheel gear teeth (7), such that each gear-tooth-corrected load flank (8) is replaced by a predetermined gear-tooth-corrected rear flank (9) of the same flank topography, when the hollow wheel (5) is rotated about a radial rotary axis (A_{w}) which extends centrally through the hollow wheel centre point, turned by 180° and rotated by a predetermined angle about an axial hollow wheel centre axis (Aₓ), wherein the predetermined angle can also be 0° as a function of the selection of the rotary axis.

2. Method according to claim 1, **characterised in that**
- when a load flank axis (A_{L}) is defined which, starting from the axial hollow wheel centre axis (Aₓ), extends radially outwards and centrally through a hollow wheel gear tooth (7) or a tooth gap (10) of the hollow wheel (5), and the load flanks (8), starting from the load flank axis (A_{L},), are consecutively numbered in a first circumferential direction from 1 to n, wherein n corresponds to the total number of the hollow wheel gear teeth (7) of the hollow wheel (5), and
- when a rear flank axis (A_{R}) is defined which, starting from the axial hollow wheel centre axis (Aₓ), extends radially outwards and centrally through a hollow wheel gear tooth (7) or a tooth gap (10) of the hollow wheel (5), wherein the rear flank axis (A_{R}) is arranged at a predetermined angle Δ to the load flank axis (A_{L}), and the rear flanks (9), starting from the rear flank axis (A_{R}), are consecutively numbered from 1 to n in a second circumferential direction counter to the first circumferential direction, wherein n corresponds to the total number of the hollow wheel gear teeth (7) of the hollow wheel (5),
the gear tooth corrections are made to the rear flanks (9) such that all gear tooth corrections which are made to a rear flank (9) are point-symmetrical to those gear tooth corrections which are made to a load flank (8) with identical numbering, in relation to an axis of symmetry (A_{S}) within planes which extend perpendicularly to the axis of symmetry (A_{S}), wherein the axis of symmetry (A_{S}) extends centrally between the load flank axis (A_{L}) and the rear flank axis (A_{R}), i.e. at an angle Δ/2 both to the load flank axis (A_{L}) and also to the rear flank axis (A_{R}).

3. Method according to claim 1 or 2, **characterised in that** the rotary axis (A_{W}) corresponds to the axis of symmetry (A_{S}).

4. Method according to one of claims 2 or 3, **characterised in that** the predetermined angle Δ is 0°.

5. Method according to one of claims 2 to 4, **characterised in that** the load flank axis (A_{L}) extends at a predetermined angle δ to a reference axis (A_{Ref}), which, starting from the axial hollow wheel centre axis (Aₓ), extends radially outwards and centrally through the hollow wheel (5) and forms a reference with respect to a system which has a transmission (4) in which the hollow wheel (5) is to be mounted as intended.

6. Method according to one of the preceding claims, **characterised in that** the gear tooth corrections are performed at the same time in each case for at least one load flank (8) and at least one rear flank (9), in particular in the context of dual-flank grinding on a profile grinding machine.

7. Method according to one of the preceding claims, **characterised in that** the hollow wheel (5) is provided on both sides in each case with a flange connection and/or arrangement of mounting holes (14) which serve for the attachment of the hollow wheel (5) to the gear casing, wherein the positions of the flange connections and/or of the mounting holes (14) are selected as a function of the position of the reference axis (A_{Ref}) and/or the position of the load flank axis (A_{L}) and/or the position of the rear flank axis (A_{R}), such that the hollow wheel (5) can be mounted in the rotated state without reworking, **in that** each gear-tooth-corrected load flank (8) is replaced by the predetermined gear-tooth-corrected rear flank (9) of the same geometry.

8. Method according to one of the preceding claims, **characterised in that** the hollow wheel (5) is provided with at least one marking (M) characterising the intended installation position.

9. Method according to claim 8, **characterised in that** a gearing component fixed to the housing arranged adjacent to the hollow wheel (5) or the gear casing itself is provided with a further marking (M) characterising the intended installation position of the hollow wheel (5).

10. Method for manufacturing or repairing a planetary gear having a gear casing, **characterised in that** a hollow wheel (5) manufactured according to a method in accordance with one of the preceding claims is mounted fixed to the housing in the gear casing.

## Revendications

1. Procédé de fabrication d'une couronne (5) à denture intérieure, qui doit être montée de manière fixe par rapport au carter dans un carter d'un engrenage épicycloïdal, le procédé ayant le stade suivant lequel on effectue, sur le pourtour de la couronne (5), des corrections de denture sur les flancs (8) de charge des diverses dents (7) de la couronne, les corrections de denture sur les divers flancs (8) de charge étant effectuées différemment de manière ciblée sur le pourtour de la couronne (5), de manière à obtenir, sur le pourtour, des flancs (8) de charge ayant des topographies de flanc différentes, **caractérisé en ce que** le procédé a le stade supplémentaire suivant lequel on effectue, sur le pourtour de la couronne (5), également pour les flancs (9) arrière des diverses dents (7) de la couronne, des corrections de denture, de manière à remplacer chaque flanc (8) de charge corrigé en denture par un flanc (9) arrière corrigé en denture définie à l'avance, de même topographie de flanc, lorsque l'on retourne à 180° la couronne (5) autour d'un axe (A_{W}) de retournement radial, qui s'étend au milieu en passant par le centre de la couronne, et lorsqu'on la tourne d'un angle déterminé à l'avance autour d'un axe (A_{X}) médian axial de la couronne, l'angle déterminé à l'avance pouvant, en fonction du choix de l'axe de retournement, être également de 0°.

2. Procédé suivant la revendication 1, **caractérisé en ce que**
- si on définit un axe (A_{L}) de flanc de charge, qui s'étend à partir de l'axe (A_{X}) médian axial de la couronne radialement vers l'extérieur et passe au milieu dans une dent (7) de la couronne ou d'un intervalle (10) entre les dents de la couronne (5), et si on numérote les flancs (8) de charge à partir de l'axe (A_{L}) du flanc de charge dans un premier sens de rotation de 1 à n, n correspondant au nombre total de dents (7) de la couronne (5), et
- si on définit un axe (A_{R}) de flanc arrière, qui s'étend à partir de l'axe (A_{X}) médian axial de la couronne vers l'extérieur radialement et au milieu en passant dans une dent (7) de la couronne ou un intervalle (10) entre les dents de la couronne (5), l'axe (A_{R}) de flanc arrière faisant un angle Δ défini à l'avance avec l'axe (A_{L}) de flanc de charge, et si l'on numérote les flancs (9) arrière à partir de l'axe (A_{R}) de flanc arrière dans un deuxième sens de rotation contraire au premier sens de rotation de 1 à n, n étant le nombre total de dents (7) de la couronne (5),
on effectue les corrections de denture sur les flancs (9) arrière, de manière à ce que toutes les corrections de denture effectuées sur un flanc (9) arrière soient à symétrie ponctuelle par rapport à un axe (A_{S}) de symétrie dans des plans, qui sont perpendiculaires à l'axe (A_{S}) de symétrie, avec les corrections de denture effectuées sur un flanc (8) de charge de même numéro, l'axe (A_{S}) de symétrie s'étendant au milieu entre l'axe (A_{L}) de flanc de charge et l'axe (A_{R}) de flanc arrière, donc en faisant un angle Δ/2 tant avec l'axe (A_{L}) de flanc de charge qu'avec également l'axe (A_{R}) de flanc arrière.

3. Procédé suivant la revendication 1 ou 2, **caractérisé en ce que** l'axe (A_{W}) de retournement correspond à l'axe (A_{S}) de symétrie.

4. Procédé suivant l'une des revendications 2 ou 3, **caractérisé en ce que** l'angle Δ déterminé à l'avance est de 0°.

5. Procédé suivant l'une des revendications 2 à 4, **caractérisé en ce que** l'axe (A_{L}) de flanc de charge fait un angle Δ déterminé à l'avance avec un axe (A_{Ref}) de référence, qui s'étend à partir de l'axe (A_{X}) médian axial de la couronne vers l'extérieur radialement et au milieu dans la couronne (5) et forme une référence par rapport à un système, qui a un engrenage (4), dans lequel la couronne (5) doit être montée conformément aux prescriptions.

6. Procédé suivant l'une des revendications précédentes, **caractérisé en ce que** l'on effectue, en même temps, les corrections de denture respectivement pour au moins un flanc (8) de charge et au moins un flanc (9) arrière, notamment dans le cadre d'une rectification de deux flancs sur une rectifieuse de profil.

7. Procédé suivant l'une des revendications précédentes, **caractérisé en ce que** la couronne (5) est pourvue des deux côtés respectivement d'une liaison par bride et/ou d'un agencement de trous (14) de montage, qui sert à fixer la couronne (5) au carter de l'engrenage, les positions des liaisons par bride et/ou des trous (14) de montage étant choisies en fonction de la position de l'axe (A_{Ref}) de référence et/ou de la position de l'axe (A_{L}) de flanc de charge et/ou de la position de l'axe (A_{R}) de flanc arrière, de manière à pouvoir monter sans réusinage la couronne (5) à l'état retourné, dans lequel chaque flanc (8) de charge corrigé en denture est remplacé par le flanc (9) arrière corrigé en denture déterminé à l'avance de même géométrie.

8. Procédé suivant l'une des revendications précédentes, **caractérisé en ce que** l'on munit la couronne (5) d'au moins un repère (M) caractérisant une position de montage conforme aux prescriptions.

9. Procédé suivant la revendication 8, **caractérisé en ce que** l'on munit également un élément de l'engrenage fixé au carter et disposé au voisinage de la couronne (5) ou le carter de l'engrenage lui-même d'un autre repère (M) caractérisant la position de montage conforme aux prescriptions de la couronne (5).

10. Procédé de fabrication ou de réparation d'un engrenage épicycloïdal ayant un carter d'engrenage, **caractérisé en ce que** l'on monte, dans le carter de l'engrenage, de manière fixe par rapport au carter, une couronne (5) fabriquée suivant l'une des revendications précédentes.
